(19) Europäisches Patentamt
European Patent Office
Office européen des brevets

(11) EP 4 122 960 A1

(12) EUROPEAN PATENT APPLICATION

(43) Date of publication:
**25.01.2023 Bulletin 2023/04**

(21) Application number: **21382649.8**

(22) Date of filing: **19.07.2021**

(51) International Patent Classification (IPC):
***C08B 15/06*** *(2006.01)* ***C08G 63/91*** *(2006.01)*
***C08G 73/02*** *(2006.01)*

(52) Cooperative Patent Classification (CPC):
(C-Sets available)
**C08B 15/06; C08F 220/56; C08G 63/685; C08G 63/91; C08G 73/0206** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Consejo Superior De Investigaciones Científicas (CSIC)**
**28006 Madrid (ES)**

(72) Inventors:
- **REINECKE, Helmut Wolfgang**
  **28006 Madrid (ES)**
- **BOSCH SAROBE, Paula**
  **28006 Madrid (ES)**
- **GARCÍA SÁNCHEZ, Carolina**
  **28006 Madrid (ES)**
- **SALGADO SONEIRA, Cástor**
  **28006 Madrid (ES)**
- **YUSTE SÁNCHEZ, Vanesa**
  **28006 Madrid (ES)**
- **MARTÍNEZ CAMPOS, Enrique**
  **28006 Madrid (ES)**
- **CUE LÓPEZ, Raquel**
  **28006 Madrid (ES)**
- **GALLARDO RUIZ, Alberto**
  **28006 Madrid (ES)**
- **RODRÍGUEZ HERNÁNDEZ, Juan**
  **28006 Madrid (ES)**
- **ELVIRA PUJALTE, Carlos**
  **28006 Madrid (ES)**
- **REVIRIEGO PICÓN, Felipe**
  **28006 Madrid (ES)**

(74) Representative: **Pons**
**Glorieta Rubén Darío 4**
**28010 Madrid (ES)**

# (54) PROCESS FOR THE PREPARATION OF FUNCTIONAL CELLULOSE AND FUNCTIONAL POLYESTER MATERIALS AND MATERIALS THUS OBTAINED

(57) The present invention relates to functional cellulose and functional polyester materials and a preparation process thereof that comprises the activation of a compound with carbonylbiscaprolactam (CBC), and wherein the compound comprises at least an N-halamine precursor group; impregnating the material comprising cellulose or partially hydrolyzed polyester with a solution containing the activated compound; drying and curing the impregnated material to obtain the material functionalised in its surface with the compound. The functionalised material that has good durability, resisting tenths of washing cycles without losing its properties, and also having virucidal and bactericidal properties.



Processed by Luminess, 75001 PARIS (FR)

(Cont. next page)

(52) Cooperative Patent Classification (CPC): (Cont.)

C-Sets
**C08F 220/56, C08F 220/20;**
**C08F 220/56, C08F 220/60**

## Description

The present invention relates to functional cellulose and functional polyester materials and a preparation process thereof. More particularly, the present invention refers to functional cellulose and functional polyester materials having virucidal and bactericidal properties.

## BACKGROUND ART

Cellulose, polyesters and cellulose/polyester blends are extensively used in fabrics, textiles and spun yarn applications due to its numerous advantages: origin from natural and/or renewable resources, excellent mechanical properties (robustness and resistance to deep washing processes), comfortability, non-toxic, biodegradability and/or recyclability, etc. These characteristics are also the main reason why cellulose and polyester are the most frequently used materials for textiles in the medical and health field where bed sheets, medical gowns, towels, etc., are made from these materials. In this context, and particularly since the Covid-19 pandemic, fabrics with virucidal properties have gained increasing interest. As most of the textiles used in the sanitary area are frequently washed, it is important to make sure that the material carrying the biocide properties is resistant to the washing conditions and remain intact even after tenths of washing cycles. One strategy to achieve this is the covalent binding of the functional molecules to the cellulose backbone.

Cellulose is a high molecular weight biopolymer composed of β-1-4-linked anhydro-D-glucose units. Introducing molecules by using these hydrophilic hydroxyl groups on the cellulose surface is the most common strategy to functionalize cellulose and cellulose/polyester blends. In terms of chemical reaction type, the three most used strategies are esterification, oxidation/amidation, and silanization and a large number of review articles and patents exists on this subject (Hubbe, M. A et al. BioRes. 2015 10(3), 6095-6206). Also, the use of aliphatic or aromatic isocyanates and diisocyanates for the chemical modification of cellulose has been described for many years (Hatem Abushammala and Jia Mao, Molecules 2019, 24, 2782). However, all these reactions are sensitive to water and humidity making it impossible to apply the modifier molecules from aqueous solution to the cellulose. Furthermore, in many cellulose fabrics the number of accessible OH groups at the surface are strongly limited due to crystallization phenomena and hydrogen bonds within the material. For this reason, functional groups of high reactivity able to react at a solid-solid interface have to be used for an efficient anchoring process.

In the textile industry, polyester fibre is widely produced, however, there are several serious problems encountered in its modification due to nonpolar groups on the fibre surface. Firstly, polyester has a very low moisture regain and this results in poor comfort and poor static resistance. Traditional polyester has poor handle properties and sometimes these are modified by special finishing methods. Among them, treatment with amines (Popescu, V., et al. Ind. Eng. Chem. Res., 53, 2014, p. 16652), surface functionalization by plasma and grafting with agents rich in polar groups) and surface hydrolysis by a sodium caustic (sodium hydroxide) solution have been reported with excellent results (Tavanai, H., The Journal of The Textile Institute (2009), 100, 633-639). It is believed that hydrophilic groups such as carboxylic acid groups (COOH) are produced on the fibre surface.

Due to the enormous use of cellulosic textiles in the sanitary area there is a need for strategies that confer antimicrobial properties to these fabrics. N-halamines have been proven to be efficient antimicrobial agents and many attempts have been made to efficiently link them to cotton fabrics.

In particular, a series of N-halamine siloxane precursors were successfully prepared and bound to cellulose, using an organic solvent due to the poor solubility of siloxanes in water (US 6969769 B2). However, siloxane N-halamines are not very stable and cannot be stored for long times (Ren, X. H. et al. Cellulose 2008, 15, 593-598). For this reason, some water-soluble N-halamine epoxides were synthesized in order to prepare antimicrobial cotton fabrics (Liang, J. et al. Ind. Eng. Chem. Res. 2007, 46, 6425-6429). The relatively low reactivity and insufficient chlorine loading of epoxides limited their applications. As an alternative, a reactive derivative of melamine, 2-amino-4-chloro-6-hydroxy-s-triazine (ACHT) with which the cotton was coated, was developed, which gave the fabric a powerful antibacterial function (Chen, Z. et al. Biomaterials 2007, 28, 1597-1609). More recently, a highly reactive triazine derivative, 2,4-dichloro-6-hydroxy-1,3,5-triazine (DCHT) was prepared by controlled hydrolysis of cyanuric chloride which was used to treat cotton fabrics directly. This textile-anchored triazine rendered the material antimicrobial after exposure to dilute bleach (Ma, K. K.; J. Appl. Polym. Sci. 2014, 131, 40627). The triazine derivative was highly reactive and easy to bind to cellulosic materials through nucleophilic substitution reactions.

A drawback of the technology that uses trichlorotriazine derivatives is the high toxicity of this compound and the impossibility of applying it from an aqueous solution.

In the present invention, an alternative method is presented that allows for efficient and simple anchoring, preferably from aqueous solutions, of polymeric N-halamine precursors to cellulose, cellulose/polyester fabrics and textiles and partially hydrolyzed polyesters, using non-toxic materials in an economical and environmentally friendly process. The process of the invention also allows to obtain materials with exceptional virucidal and bactericidal properties.

## SUMMARY OF THE INVENTION

The inventors have found a new process for obtaining a functional cellulosic or polyester fabric material that has good durability, resisting tenths of washing cycles without losing its properties, and also having virucidal and bactericidal properties.

Then, a first aspect of the invention refers to a process for the surface functionalization of a material comprising cellulose or partially hydrolysed polyester, said process comprising:

a) activating a compound selected from:

(i) a compound comprising at least a hydroxyl group (-OH) and at least an N-halamine precursor group selected from: primary or secondary amide and primary imine, or

(ii) a compound comprising at least a primary and/or secondary amine group (-$NH_2$, -NH-) and at least an N-halamine precursor group selected from: primary or secondary amide and primary imine, or

(iii) a compound comprising primary and/or secondary amine groups (-$NH_2$, -NH-),
by reaction of at least a hydroxyl group (-OH), a primary or secondary amine group (-$NH_2$, -NH-) with carbonylbiscaprolactam (CBC), with the proviso that, when the compound is the compound (iii), not all of primary and/or secondary amine groups (-$NH_2$, -NH-) are made to react with CBC,

b) impregnating the material comprising cellulose or partially hydrolyzed polyester with a solution containing the activated compound obtained in step a),
c) drying and curing the impregnated material obtained in step b) to obtain the material functionalised in its surface with the compound.

The carbonylbiscaprolactam (CBC) is represented below:

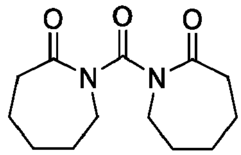

As used herein, the term "N-halamine" refers to a functional group containing one or more nitrogen-halogen covalent bonds that is normally formed by the halogenation of imide, amide or amine groups of a compound. The presence of the halogen renders the functional group biocidal.

According to the present invention, the N-halamine precursor groups (groups from which the N-halamine is formed) are selected from primary or seconcdary amine ($NH_2$, -NH-) (in the case of compound (iii) indicated in step a) of the process), and, primary (-CO-$NH_2$), secondary amide (-CO-NH-) and primary imine (C=NH) (in the case of compounds (i) or (ii) indicated in step a) of the process). All of these N-halamine precursor groups include a N-H bond, from which the N-halamine may be generated.

In the case of compound (iii) indicated in step a) of the process, not all the -$NH_2$ or - NH- groups will react with CBC, leaving unreacted -$NH_2$ or -NH- groups that can form N-halamines.

According with the present invention, the term "compound" mentioned in step a) refers to any molecule containing the groups as defined in the step a).

In a preferred embodiment, the "compound" mentioned in step a) is a polymer.

According to the invention, the term "polymer" refers to a compound, linear or branched, prepared by polymerizing monomers, whether of the same or a different type. Then, the generic term "polymer" thus embraces the term homopolymer (which refers to polymers prepared from only one type of monomer), copolymers (which refers to polymers prepared from two different monomers), and polymers prepared from more than two different types of monomers.

In a preferred embodiment, the compound, preferably a polymer, used in step a) is a water-soluble compound. This compound allows for the application of the activated compound to the material from water solution.

The term "water-soluble compound" refers to a compound which is at least partially soluble (at least 1g/l) in water at 25° C.

In a preferred embodiment, the compound used in step a) is a copolymer wherein one of the monomers is acrylamide (AA) (i.e.: polyacrylamide (PAA)-based copolymer). More preferably, the monomer of acrylamide in a quantity between 90 and 99 mol%, preferably 98 mol% with respect to the total moles of the copolymer. The other monomer

would comprise a primary or secondary amine ($-NH_2$, -NH-) or a hydroxyl (-OH) group to react with CBC, for example, 3-aminopropylacrylamide or hydroxyethylmethacrylate.

In a more preferred embodiment, the compound used in step a) is the copolymer of the monomers acrylamide and 3-aminopropylacrylamide (poly(acrylamide-co-3-aminopropylacrylamide), abbreviated as poly(AA-co-APAA)). More preferably, the copolymer (poly(AA-co-APAA)) comprises the first co-monomer acrylamide (AA) in a quantity between 90 and 99 mol%, preferably 98 mol% with respect to the total moles of the copolymer. In poly(AA-co-APAA), the $NH_2$ group of APAA serves to react with CBC and the amide groups of both AA and APAA are precursors of N-halamines.

In another preferred embodiment, the compound used in step a) is the copolymer of the monomers acrylamide and hydroxyethylmethacrylate (poly(acrylamide-co-hydroxyethylmethacrylate), abbreviated as poly(AA-co-HEMA)). More preferably, the amount of the second co-monomer (HEMA) is between 1 and 10 mol% with respect to the total moles of the copolymer. In poly(AA-co-HEMA), the OH group of HEMA reacts with CBC and the amide groups of AA are precursors of N- halamines.

In another preferred embodiment, the compound used in step a) is the polymer polyethyleneimine (PEI). In PEI, which is composed of many primary, secondary and tertiary amine groups, some of the primary and/or secondary amine groups will react with CBC and the rest of them will be the precursors of N-halamine.

The preferred polymers PEI, poly(AA-co-APAA) and poly(AA-co-HEMA), as mentioned above, are water-soluble polymers, therefore, they allow for the application of the activated polymer to the material from water solution.

Both the cellulose and partially hydrolyzed polyester of the material comprise -OH groups. These -OH groups will react with the activated compound to generate the functionalized material in the curing step.

The curing process (in step c)) allows the OH groups of the cellulose or of the partially hydrolized polyester to react with the CBC activated compound by ringopening obtaining this way the material functionalized in its surface with the corresponding activated compound.

In a preferred embodiment, the material comprising cellulose is selected form: wood fibres, a paper product and a fabric. More preferably, the material comprising cellulose is a fabric selected from a cotton fabric, more preferably, 100% cotton fabric, or a fabric comprising or consisting in a cellulose-polyester bend.

The term "fabric" covers all woven and knitted materials, but they include non-woven materials, too. The textile materials are also included in the definition of fabric and refers in particular to a woven or knitted fabric (textile fabric).

The material comprising partially hydrolysed polyester is a material, preferably a fabric, comprising or consisting of polyester wherein the polyester has been partially hydrolyzed so that it comprises -OH groups in its structure. The polyester is preferably a polyhydroxyalcanoate (PHA), more preferably a polyhydroxyalcanoate (PHA) selected from: poly(ethylene terephthalate) (PET), polycaprolactone, polylactic acid and copolymers thereof.

The polyester can be partially hydrolysed by immersion of the fabric in boiling aqueous caustic solution, preferably 1M, for a period of time of between 20 minutes and 1 hour. After treatment, the fabric should be removed from the solution and thoroughly rinsed with water.

In a preferred embodiment, the activation (step a) is carried out at temperatures between 70 and 180ºC for a time between 30 min and two hours. Bearing in mind that each molecule of CBC will react with one $-NH_2$ or -NH- group or with one -OH group, preferably the mol ratio between CBC and the compound to be activated is at least 1:1, more preferably is 1:1.

If a solvent is used (for example in case of a solid compound bearing the $-NH_2$, -NH- or -OH group), formamide or DMF are preferred. The concentration of CBC in the solution is preferably between 0,1-1 g per 10 ml of the solution.

Compounds bearing a primary amine group ($-NH_2$) or a secondary amine group (-NH-) are preferably activated at a temperature between 70 and 110 ºC during a time between 20 minutes and 3 hours, more preferably at 90 °C for 1 hour.

In a preferred embodiment the activation step of compounds bearing a hydroxyl group (-OH) is carried out for a period of time between 30 min and two hours, and at a temperature between 120 and 180ºC, more preferably for 1 hour at 150 °C, and using $MgBr_2$ or $SnOc_2$ (Tin dioctoate) as a catalyst. The amount of the catalyst used is preferably 5mol% with respect to CBC.

If a compound comprises both $NH_2$ (or secondary amine groups -NH-) and OH groups, the CBC can selectively react with the $NH_2$ groups (or with secondary amine groups - NH-) by controlling the reaction conditions, as indicated in the above paragraph.

The solution containing the activated compound for impregnating step b) is an aqueous solution, ethanolic solution, dimethylformamide, formamide or other organic solvent. Preferably, it is an aqueous solution (in this case, the compound used can be a water-soluble compound).

In a preferred embodiment of the present invention, the activated compound in the solution of step b) is in a concentration between 2.5-30% by weight, preferably 10% by weight.

In a preferred embodiment, the material is impregnated in step b) with from 0.1 to 10 times their weight of a solution comprising the activated compound.

Preferably, the solution comprising the activated compound is applied to the material by dip-coating or spraying.

In a preferred embodiment of step c), the drying step is carried out between 50 and 100 ° C, preferably at 90 ° C until the solvent is removed. When the material is completely dried, the temperature is increased to start the curing process. In a preferred embodiment, this curing step is carried out between 110 and 240 ° C during 1-30 min, more preferably, between 110-140 ºC during 1-5 minutes.

In a preferred embodiment, to remove all unreacted polymers that have not reacted and have not been anchored to the substrate (i.e,: the material comprising cellulose or partially hydrolyzed polyester), the process comprises an additional step consisting of thoroughly washing the functionalized material obtained after the curing step with water and a detergent, for example commercial laundry detergent. In a preferred embodiment, the washing step is carried out for 30 minutes at 60ºC.

In a preferred embodiment, the process comprises an additional step wherein the functionalized material obtained after the curing step or after the washing step is treated with aqueous sodium hypochlorite solution (household bleach). This treatment produces the chlorination of the N-halamine precursor groups present in the structure of the polymer, generating the N-halamine itself. The chlorination step is preferably carried out by immersion of the textile for a period of time between 20 minutes and 2 hours at room temperature in aqueous sodium hypochlorite solution of any concentration, preferably using household bleach.

The material functionalised with N-halamine polymers, obtainable by the process described in the present invention, presents biocidal properties. The treated materials are bactericidal and virucidal by oxidative halogen transfer from N-halamines to the pathogen and then, by contact killing mechanism, this is, without the release of any chemical. The virucidal activity of the materials is rechargeable multiple times by bleach treatment / washing.

A second aspect of the invention refers to a material, obtainable by the process described in the first aspect of the invention, characterized in that it comprises cellulose or polyester and a compound, preferably a polymer, wherein the cellulose or partially hydrolyzed polyester and the compound are covalently linked by a linker moiety of formula:

(I) 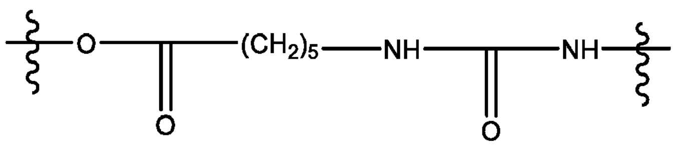

or

(II) 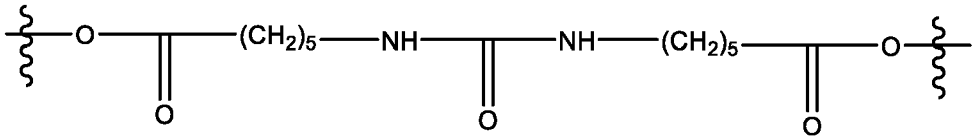

and wherein the compound comprises at least an N-halamine precursor group selected from: primary or secondary amine, primary or secondary amide and primary imine when the linker moiety is (I)

or

selected from: primary or secondary amide and primary imine when the linker moiety is (II).

In a preferred embodiment, the material comprises wood fibres or paper.

In a preferred embodiment, the material comprises a fabric, more preferably a fabric comprising or consisting of cotton fabric or a cellulose-polyester bend.

In a preferred embodiment, the material comprises a fabric comprising or consisting of polyester. More preferably, said polyester is preferably a polyhydroxyalcanoate (PHA), more preferably a polyhydroxyalcanoate (PHA) selected from: poly(ethylene terephthalate) (PET), polycaprolactone, polylactic acid and copolymers thereof.

In a preferred embodiment, the compound in the material is a copolymer wherein one of the monomers is acrylamide (AA) (i.e.: polyacrylamide (PAA)-based copolymer). More preferably, the monomer of acrylamide in a quantity between 90 and 99 mol%, preferably 98 mol% with respect to the total moles of the copolymer.

In a more preferred embodiment, the compound in the material is a copolymer of the monomers acrylamide and 3-aminopropylacrylamide (poly(acrylamide-co-3-aminopropylacrylamide), abbreviated as poly(AA-co-APAA)). More preferably, the copolymer (poly(AA-co-APAA)) comprises the first co-monomer acrylamide (AA) in a quantity between 90 and 99 mol%, preferably 98 mol% with respect to the total moles of the copolymer.

In another preferred embodiment, the compound is a copolymer of the monomers acrylamide and hydroxyethylmethacrylate (poly(acrylamide-co-hydroxyethylmethacrylate), abbreviated as poly(AA-co-HEMA)). More preferably, the amount of the second co-monomer (HEMA) is between 1 and 10 mol% with respect to the total moles of the copolymer.

In another preferred embodiment, the compound is the polymer polyethyleneimine (PEI).

The functionalized material of the present invention has excellent virucidal properties, mainly against Sars-CoV-2, where the efficiency is above 90% (it is able to eliminate 90% of viruses) and, in particular above 99% in case of materials comprising cellulose, such as cotton fabric.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples are provided by way of illustration and are not intended to be limiting of the present invention.

**DESCRIPTION OF THE DRAWINGS**

**Fig. 1.** Schematic representation of the process of the invention when the compound ("R" in the scheme of fig. 2) used to functionalize the material comprises at least an -OH group (activation of a -OH group by means of CBC).

**Fig. 2.** Schematic representation of the process of the invention when the compound ("R" in the scheme of fig. 1) used to functionalize the material comprises at least an $-NH_2$ group (activation of a $-NH_2$ group by means of CBC).

**Fig. 3.** $^1$H-RMN spectrum of the CBC activated P(AA-co-APAA) obtained in example 1. A characteristic peak is observed at 3.95 ppm which corresponds to protons from the CBC ring.

**Examples**

The invention will be further illustrated with reference to specific embodiments. It should be understood that these examples are for illustrative purposes only and are not intended to limit the scope of the present invention

**Example 1: Preparation of CBC activated P(AA-co-APAA).**

3 g (42 mmol) of acrylamide, 208 mg (1.26 mmol) 3-aminopropylacrylamide hydrochloride and 104 mg (0.63 mmol) of azobis-isobutyronitrile (AIBN) (the reactants were acquired in Signa-Aldrich) are dissolved in 42 ml of formamide, $N_2$ is bubbled through the solution for 30 minutes and copolymerization is carried out at 60ºC for 24 hours. Then, 0.2 ml of triethylamine and 327 mg (3 mol%) of CBC are added and the mixture is heated under $N_2$ for 1 hour at 100ºC. After that the mixture is purified by dialysis (pore size 3000) in water for 24 hours. After freeze-drying the solution, 2.8 g of a white CBC activated copolymer is obtained.

**Example 2: Preparation of CBC activated P(AA-co-HEMA).**

3 g (42 mmol) of acrylamide, 149 mg (1.3 mmol) 2-hydroxyethylmethacrylate (HEMA) and 104 mg (0.63 mmol) of azobis-isobutyronitrile (AIBN) are dissolved in 42 ml of formamide, $N_2$ is bubbled through the solution for 30 minutes and copolymerization is carried out at 60ºC for 24 hours. Then, 327 mg (3 mol%) of CBC and 24 mg of anhydrous $MgBr_2$ are added and the mixture is heated under $N_2$ for 1 hour at 150ºC. After that the mixture is purified by dialysis (pore size 3000) in water for 24 hours. After freeze-drying the solution, 2.9 g of a white CBC activated copolymer is obtained.

**Example 3: Preparation of CBC activated PEI.**

3 g (70 mmol) of polyethyleneimine (M=10,000g/mol) and 527 mg (3 mol%) of CBC are dissolved in 20 ml of dimethylformamide and the mixture is heated for 1 hour under $N_2$ at 100ºC. After that the mixture is purified by dialysis (pore size 1000) in water for 24 hours. After freeze-drying the solution, 3.4 g of a yellow oily CBC activated copolymer is obtained.

**Example 4: Partial hydrolysis of a polyester substrate**

Due to the lack of free OH groups in non-treated polyester an etching process previous to the reaction with CBC activated polymer chains is carried out:

2.5 g of polyester fabric (volume of solution (ml) / weight (g) of textile ratio 40: 1) is added to 100 ml of a 1 molar NaOH solution (40g /l), and is stirred at 95° C for 1h. Subsequently, the polyester substrate is rinsed with water immersed into 100 ml of an acetic acid solution (2% wt) for 30 min at room temperature. Finally, it is rinsed again with water and dried at 60ºC for in the oven.

**Example 5: Fixation of CBC activated polymers to the substrate.**

A piece of 5 $cm^2$ cm of dry Cotton or partially hydrolyzed polyester (obtained in the example 4) was dipped into a 5 wt% aqueous solution of CBC activated polymer (the activated polymer used was, in one case, the one obtained in example 1 and, in other case, the one obtained in example 3). The fabric is squeezed to remove excess solution until its weight is approximately twice of that of the dry piece. After 30 minutes drying at 90ºC in the oven, the fabric is ironed (curing step) for 2 minutes using a household iron at medium temperature (approximately 110ºC). Subsequently, the sample is thoroughly washed for 30 minutes at 60ºC using commercial laundry detergent to remove all unreacted polymers that have not reacted and have not been anchored to the substrate.. The increase in weight due to the chemically bound PAA or PEI chains is determined gravimetrically and is analyzed by IR spectroscopy.

**Example 6: Chlorination of PAA or PEI chains linked to the substrate.**

A 2wt% aqueous bleach solution is adjusted to pH 6.9 using hydrochloric acid.

The textiles (obtained in example 5) to be chlorinated are introduced into the solution and stirred for 2 hours at room temperature. The samples are then rinsed with water and immersed for 90 minutes in a large amount of distilled water. After drying the fabric, its degree of chlorination is determined by conventional iodometric/thiosulfate tritration method The chlorinated fabrics were cut into pieces of 1 $cm^2$, and then treated with 5 mL of KI solution for 30 min. This solution was prepared with 20 mL of absolute ethanol, 0.4 mL of glacial acetic acid and 0.5 g of KI, at room temperature with vigorous stirring for 10 min. Then, the pieces were titrated with a $5x10^{-4}$ N sodium thiosulfate solution. The active chlorine content was calculated according to equation:

$$[Cl^+]\ (mg/cm^2) = [N\ (mol/L) * V\ (L) * 35.5\ (g/mol) * 1000\ (mg/g)]\ /\ [2*A\ (cm^2)]$$

where V is the volume (mL) of the sodium thiosulfate solution; N is the concentration of sodium thiosulfate solution; and A is the surface area of the samples in $cm^2$.

The active chlorine content of 100% cotton textiles modified with halamine-PEI functional groups ranged from 60 to 90$\mu$g/$cm^s$. The active cholrine content of 100% cotton textiles modified with P(AA-co-APAA) ranged from 5 to 10$\mu$g/$cm^2$. The active cholrine content of100% polyester textiles modified with halamine-PEI groups ranged from 10 to 20$\mu$g/$cm^2$. The active cholrine content of 92% polyester textiles modified with halamine-PEI groups ranged from 80 to 110$\mu$g/$cm^2$.

**Example 7: Inactivation efficiency on Sars-CoV-2 by 100% cotton fabrics.**

100% cotton textiles modified with halamine-PEI functional groups with a chlorine content of 60-90$\mu$g/$cm^2$ (obtained in example 6) were tested by duplicate against SARS-CoV-2 virus through the sandwich method. A virus stock of $5 \cdot 10^6$ufp/mL was diluted 1/10 in PBS and 100$\mu$L of this inoculus was pressed between two cotton pieces of 1x1cm2 and maintained at room temperature for a variable period of time (between 30-120min). Tritration of virus were performed by the standard plaque-based assay on VeroE6 cells with a limit of detection of 5ufp/mL. Unmodified cotton sample was used as control. Inactivation efficiencies of 99.6% were obtained after 30 min of contact.

**Example 8: Inactivation efficiency on Sars-CoV-2 by 100% polyester fabrics.**

100% polyester textiles modified with halamine-PEI functional groups with a chlorine content of 20-30$\mu$g/$cm^2$ (obtained in example 6) were tested by duplicate against SARS-CoV-2 virus through the sandwich method. A virus stock of $5 \cdot 10^6$ufp/mL was diluted 1/10 in PBS and 100$\mu$L of this inoculus was pressed between two polyester pieces of 1x1$cm^2$ and maintained at room temperature for a variable period of time (between 30-120min). Tritration of virus were performed by the standard plaque-based assay on VeroE6 cells with a limit of detection of 5ufp/mL. Unmodified polyester sample was used as control. Inactivation efficiencies of 94.2% were obtained after 120 min of contact.

## Claims

1. A process for the surface functionalization of a material comprising cellulose or partially hydrolysed polyester comprising:

    a) activating a compound selected from:

        (i) a compound comprising at least a hydroxyl group and at least an N-halamine precursor group selected from: primary or secondary amide and primary imine, or
        (ii) a compound comprising at least a primary and/or secondary amine group and at least an N-halamine precursor group selected from: primary or secondary amide and primary imine, or
        (iii) a compound comprising primary and/or secondary amine groups,

    by reaction of at least a hydroxyl group, a primary or secondary amine group with carbonylbiscaprolactam (CBC), with the proviso that, when the compound is the compound (iii), not all of primary and/or secondary amine groups are made to react with CBC,
    b) impregnating the material comprising cellulose or partially hydrolyzed polyester with a solution containing the activated compound obtained in step a),
    c) drying and curing the impregnated material obtained in step b) to obtain the material functionalised in its surface with the compound.

2. The process, according to claim 1, wherein material comprising cellulose is selected from the list comprising: wood fibres, a paper product, cotton fabric and a fabric comprising a cellulose-polyester bend.

3. The process, according to claim 1, wherein material comprising partially hydrolyzed polyester is a polyester fabric wherein the polyester is selected form poly(ethylene terephthalate), polycaprolactone, polylactic acid and copolymers thereof.

4. The process, according to any of the previous claims, wherein the compound mentioned in step a) is the polymer polyethyleneimine (PEI) or a copolymer wherein one of the monomers is acrylamide (AA), preferably is the copolymer of the monomers acrylamide and 3-aminopropylacrylamide or the copolymer of the monomers acrylamide and hydroxyethylmethacrylate.

5. The process, according to claim 1, wherein compounds bearing a primary and/or secondary amine group are activated at a temperature between 70 and 110 ºC during a time between 20 minutes and 3 hours.

6. The process, according to claim 1, wherein compounds bearing a hydroxyl group are activated for a period of time between 30 min and two hours and at a temperature between 120 and 180ºC, and using $MgBr_2$ or $SnOc_2$ as a catalyst.

7. The process, according to any of the previous claims, wherein the impregnation in step b) is carried out in is an aqueous solution, ethanolic solution, dimethylformamide or formamide.

8. The process, according to any of the previous claims, wherein the activated compound in the solution of step b) is in a concentration between 2.5-30% by weight.

9. The process according to any of the previous claims, wherein the drying step is carried out between 50 and 100 ° C until the solvent is removed.

10. The process, according to any of the previous claims, wherein the curing step is carried out between 110 and 240 ° C during 1-30 min.

11. The process, according to any of the previous claims, wherein the process comprises an additional step wherein the functionalized material obtained after the curing step is treated with aqueous sodium hypochlorite solution to produce the chlorination of the N-halamine precursor groups.

12. Material, obtainable by the process described in any of claims 1-10, **characterized in that** it comprises cellulose or polyester and a compound, wherein the cellulose or partially hydrolyzed polyester and the compound are covalently linked by a linker moiety of formula:

(I) 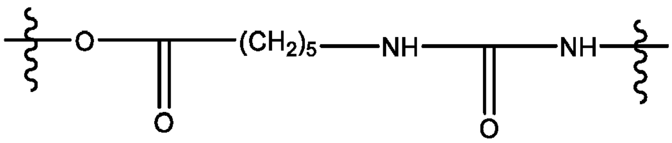

or

(II) 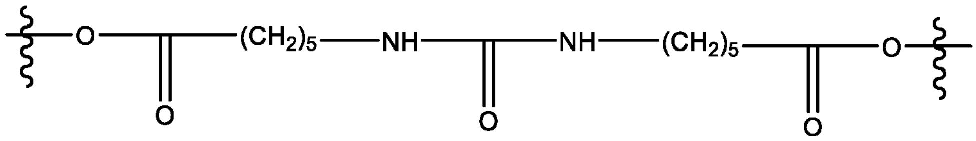

and wherein the compound comprises at least an N-halamine precursor group selected from: primary or secondary amine, primary or secondary amide and primary imine when the linker moiety is (I)
or
selected from: primary or secondary amide and primary imine when the linker moiety is (II).

**13.** The material, according to claim 12, that comprises wood fibres, paper, cotton or a cellulose-polyester bend.

**14.** The material, according to claim 12, that comprises poly(ethylene terephthalate) (PET), polycaprolactone, polylactic acid and copolymers thereof.

**15.** The material, according to any of claims 12 to 14, wherein the compound is the polymer polyethyleneimine or a copolymer of the monomers acrylamide and 3-aminopropylacrylamide or a copolymer of the monomers acrylamide and hydroxyethylmethacrylate.

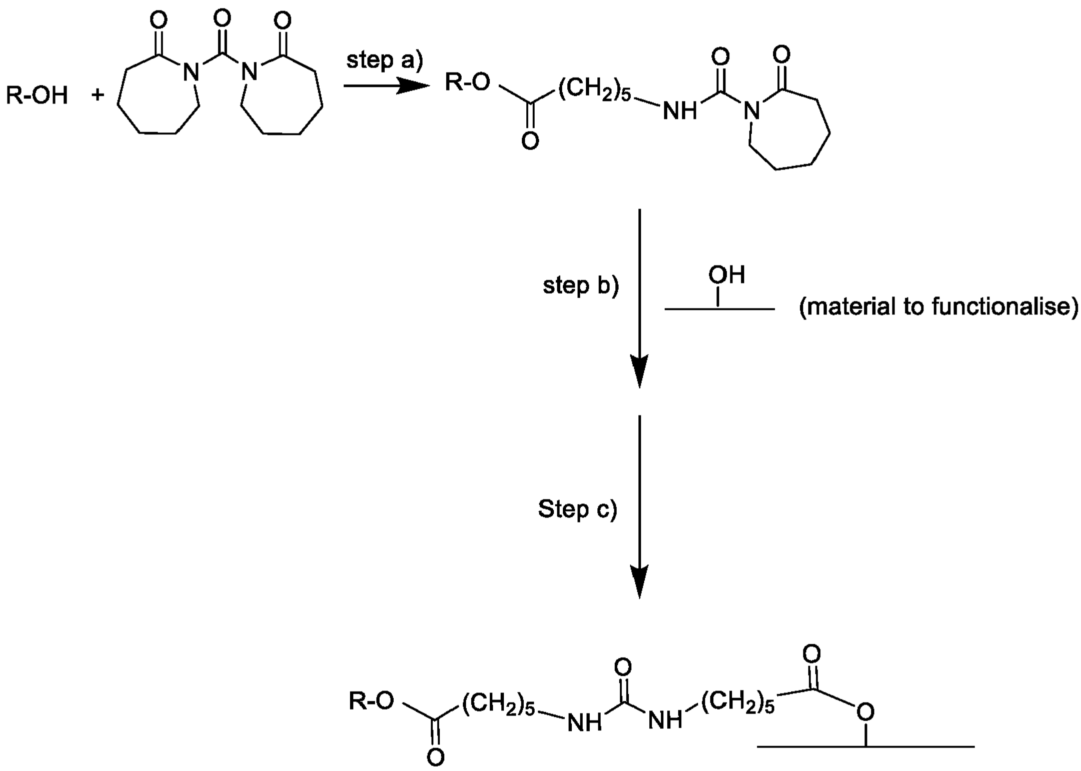


**FIG. 1**

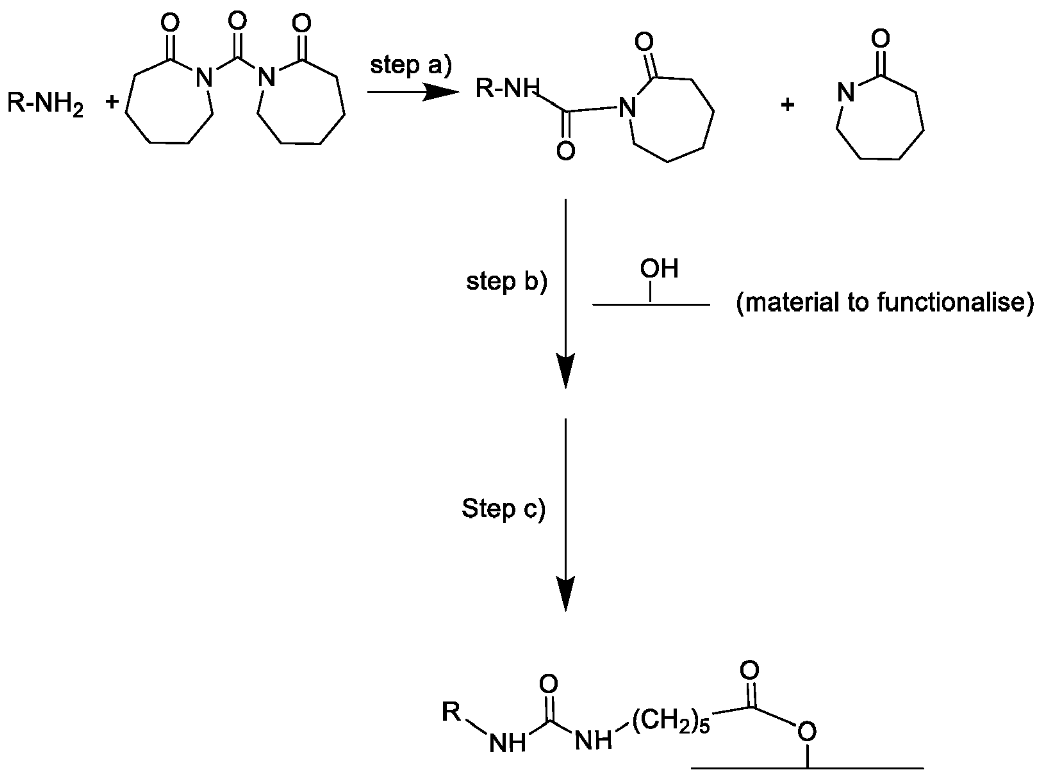


FIG. 2

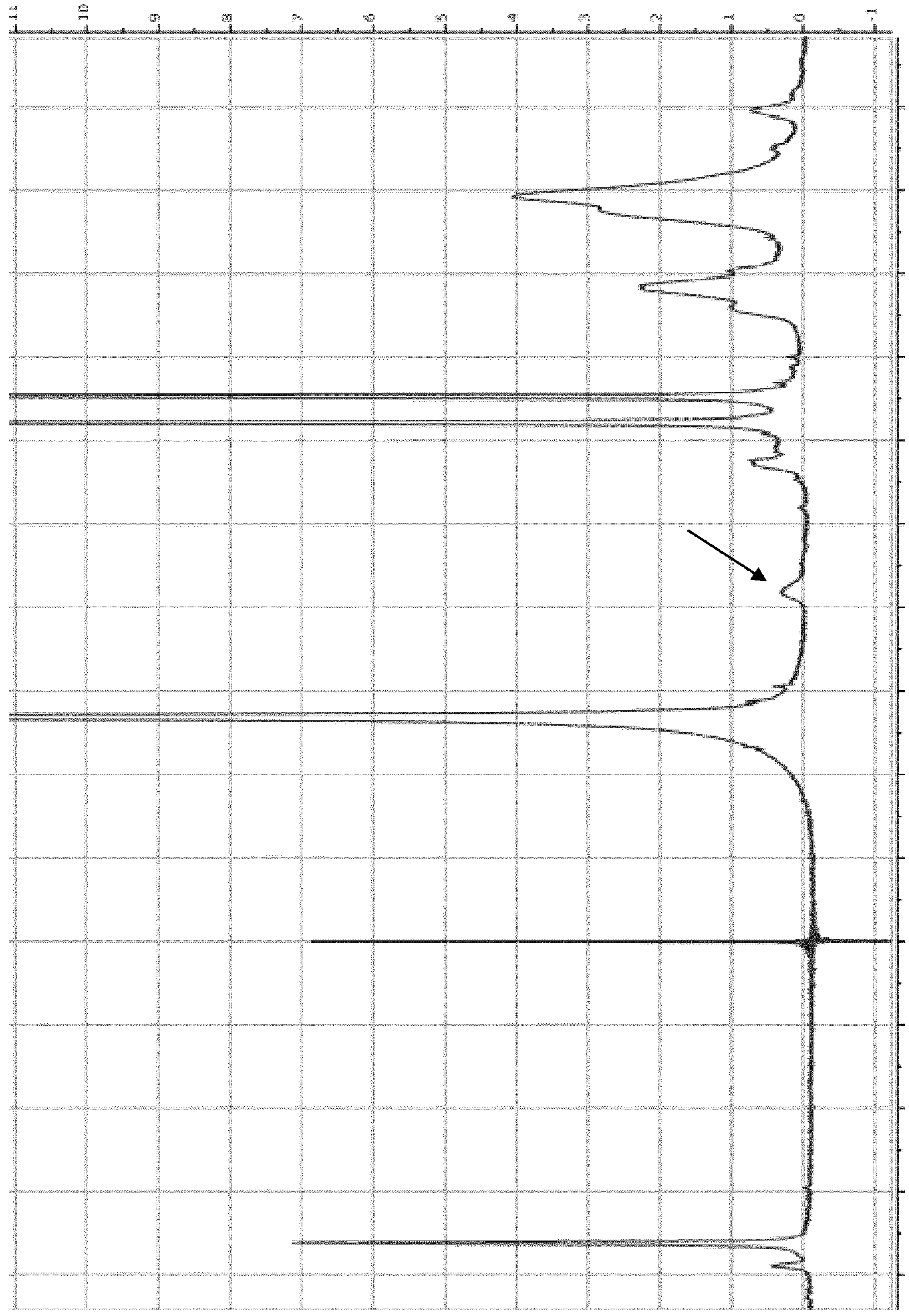


FIG. 3

Europäisches Patentamt
European Patent Office
Office européen des brevets

# EUROPEAN SEARCH REPORT

Application Number
EP 21 38 2649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/242315 A1 (ZORG INNOVATIES NEDERLAND B V [NL]; UNIV GRONINGEN [NL]) 3 December 2020 (2020-12-03)<br>* page 1, line 6 - line 12; examples 1-2 *<br>* page 5, line 18 - line 25 *<br>* page 11 *<br>* page 15 *<br>----- | 1-15 | INV.<br>C08B15/06<br>C08G63/91<br>C08G73/02 |
| A | JIAN LIN ET AL: "Mechanism of Bactericidal and Fungicidal Activities of Textiles Covalently Modified With Alkylated Polyethylenimine", BIOTECHNOLOGY AND BIOENGINEERING, JOHN WILEY, HOBOKEN, USA, vol. 83, no. 2, 20 July 2003 (2003-07-20), pages 168-172, XP002668488, ISSN: 0006-3592, DOI: 10.1002/BIT.10651 [retrieved on 2003-05-14]<br>* the whole document *<br>----- | 1-15 | |

TECHNICAL FIELDS SEARCHED (IPC)

C08B
C09J
C08G

1 The present search report has been drawn up for all claims

| Place of search | Date of completion of the search | Examiner |
|---|---|---|
| Munich | 22 December 2021 | Vaccaro, Eleonora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 38 2649

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2021

| Patent document cited in search report | Publication date | Patent family member(s) | Publication date |
| --- | --- | --- | --- |
| WO 2020242315 A1 | 03-12-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6969769 B2


### Non-patent literature cited in the description


- **HUBBE, M. A et al.** *BioRes,* 2015, vol. 10 (3), 6095-6206
- **HATEM ABUSHAMMALA ; JIA MAO.** *Molecules,* 2019, vol. 24, 2782
- **POPESCU, V. et al.** *Ind. Eng. Chem. Res.,* 2014, vol. 53, 16652
- **TAVANAI, H.** *The Journal of The Textile Institute,* 2009, vol. 100, 633-639
- **REN, X. H et al.** *Cellulose,* 2008, vol. 15, 593-598
- **LIANG, J et al.** *Ind. Eng. Chem. Res.,* 2007, vol. 46, 6425-6429
- **CHEN, Z et al.** *Biomaterials,* 2007, vol. 28, 1597-1609
- **MA, K. K.** *J. Appl. Polym. Sci.,* 2014, vol. 131, 40627